# EUROPÄISCHE PATENTANMELDUNG

(11) **EP 2 502 798 A1**
(43) Veröffentlichungstag der Anmeldung: **26.09.2012**
(21) Anmeldenummer: 11002429.6
(22) Anmeldetag: 24.03.2011
(51) Int. Cl.: B60W 30/18, F02D 41/30, B60W 10/06, G06F 9/445

(54) **Verfahren zum Steuern einer Verbrennungkraftmaschine eines Kraftfahrzeugs**

(71) Anmelder: Deutsche Telekom AG, 53113 Bonn (DE)
(72) Erfinder: Jüttner, Bernhard, 53123 Bonn (DE)

(57) **Zusammenfassung**

Verfahren zum Steuern einer Verbrennungskraftmaschine eines Kraftfahrzeugs, umfassend die folgenden Verfahrensschritte: Ermitteln von Positionsdaten, welche zumindest die aktuelle Position des Kraftfahrzeugs umfassen, Auswerten der Positionsdaten, Auswählen oder Anpassen eines Steueralgorithmus (1,2) zur aktuellen Steuerung der Verbrennungskraftmaschine in Abhängigkeit der ausgewerteten Positionsdaten.

## Beschreibung

Die Erfindung betrifft ein Verfahren zum Steuern einer Verbrennungskraftmaschine eines Kraftfahrzeugs.

Kraft und Leistung moderner Motoren von Kraftfahrzeugen werden durch entsprechende Programmierungen des dem jeweiligen Motor zugehörigen Steuergeräts geregelt. Hierbei werden zumeist Motorenplattformen verwendet, die bei derselben Motorenhardware eine weitläufige Einstellungsbandbreite sowohl der Kraft als auch der Leistung erlaubt. Änderungen dieser Einstellungen lassen sich im Steuergerät insbesondere über die OBD-Schnittstelle (On-Board-Diagnose-Schnittstelle) vornehmen. Damit lassen sich Kraft und Leistung sowohl anheben, als auch absenken bzw. im Verhältnis zueinander modifizieren.

Bisher sind derartige Modifikationen an der Motorsteuerung jedoch nur stationär in einer Werkstatt durchführbar und führen zu relativ statischen Einstellungen. Es ist daher Aufgabe der vorliegenden Erfindung die Verfahren zum Steuern einer Verbrennungskraftmaschine eines Kraftfahrzeugs entsprechend zu verbessern.

Die der Erfindung zugrundeliegende Aufgabe wird gelöst durch ein Verfahren zum Steuern einer Verbrennungskraftmaschine eines Kraftfahrzeugs. Das Verfahren umfasst die folgenden Verfahrensschritte: Ermitteln von Positionsdaten, welche zumindest die aktuelle Position des Kraftfahrzeugs umfassen, Auswerten der Positionsdaten und Auswählen oder Anpassen eines Steueralgorithmus zur aktuellen Steuerung der Verbrennungskraftmaschine in Abhängigkeit der ausgewerteten Positionsdaten. Die Positionsdaten können dabei unter anderem mittels einer Positionsermittlungseinheit ermittelt werden. Gängige Positionsermittlungseinheiten nutzen das GPS-System.

Ein Vorteil des erfindungsgemäßen Verfahrens kann darin liegen, dass die Motorcharakteristik und damit auch die Leistungsfähigkeit und insgesamt das Fahrverhalten in eine örtliche Abhängigkeit gebracht werden kann. Dies ist insbesondere dann von Vorteil, wenn gewisse Orte (Verkehrsraum) eine gewisse Anpassung von Fahrdynamik oder Ähnlichem erfordern. So kann es beispielsweise vorgesehen sein, dass durch gesetzliche Vorgaben manche Verkehrsräume erhöhte Umweltanforderungen aufweisen, insbesondere die sogenannten Umweltzonen. Innerhalb dieser Verkehrsräume kann beispielsweise vorgesehen sein, dass nur Fahrzeuge mit einer sehr geringen Schadstoffemission fahren dürfen. Künftige Schadstoffgrenzwerte in solchen Orten können möglicherweise so weit gehen, dass diese nur noch erfüllt werden können, wenn zugleich die Leistungsfähigkeit und/oder Sportlichkeit eines Fahrzeugs grundsätzlich auf einen sehr geringen Wert begrenzt sind. Es wäre aber unbefriedigend, wenn aufgrund von lediglich lokalen Anforderungen ein Fahrzeug an Orten, an denen solche strengen Grenzwertbestimmungen nicht mehr vorgesehen sind, auch nur über die verminderte Leistungsfähigkeit verfügt, da die Anpassung bisher ja nur umständlich vorzunehmen sind.

Das Verfahren kann deshalb vorzugsweise vorsehen, dass außerhalb von solchen Verkehrsräumen mit erhöhten Schadstoffgrenzwerten, insbesondere im Überlandbereich, wo die Emission von Feinstaub keine wesentliche Rolle spielt, die Leistungsfähigkeit der Motoren insbesondere erhöht sein kann. Hingegen in Innenstadtbereichen, bei denen insbesondere die Feinstaubgrenzwerte sehr niedrig sein können und damit ein Fahren mit insbesondere feinstaubemittierenden Fahrzeugen häufig verboten ist, kann die Leistungsfähigkeit heruntergesetzt sein, so dass dort sehr niedrige Grenzwerte erfüllt werden können.

Vorzugsweise umfassen die ermittelten Positionsdaten ferner prognostizierte Positionsdaten einer zukünftigen Position eines Kraftfahrzeugs. Eine mögliche Kenntnis darüber, wo sich das Fahrzeug in Zukunft, insbesondere innerhalb weniger Minuten aufhalten wird, kann die Steuerung der Verbrenndungskraftmaschine insbesondere im Hinblick auf ein gutes Fahrverhalten positiv beeinflussen. So kann insbesondere vorgesehen sein, dass bei prognostizierter Einfahrt in einen Verkehrsraum, bei dem eine gewisse Feinstaubemission unerwünscht, bzw. nicht erlaubt ist, das Abbrennen eines Feinstaub-Partikelfilters rechtzeitig vor Erreichen dieses Verkehrsraumes erfolgt. Denn es ist zur berücksichtigen, dass das Abbrennen von Rußpartikelfiltern selbst eine Emission von Rußpartikeln erzeugen kann. Ferner kann das Fahr- bzw. Komfortverhalten des Fahrzeugs bereits auf das zu erwartende verminderte Leistungsangebot in diesem Verkehrsraum vorbereitet werden. So kann insbesondere bereits vor Erreichen des Verkehrsraumes vorgesehen sein, dass die Leistungsfähigkeit bereits etwas gedrosselt ist, so dass der Fahrer bei Erreichen des entsprechenden Verkehrsraums nicht von einer abrupten Leistungsminderung überrascht wird.

Vorzugsweise ist daher vorgesehen, dass ein erster Steueralgorithmus von aktuellen oder zurückliegenden Positionsdaten ausgewählt oder angepasst wird und dass ein zweiter Steueralgorithmus anhand der prognostizierten Positionsdaten ausgewählt oder angepasst wird. Insbesondere in Abhängigkeit der beiden Steueralgorithmen wird dann ein Übergangsalgorithmus erzeugt, der einen stetigen Übergang vom ersten Steueralgorithmus zum zweiten Steueralgorithmus darstellt. Falls der zweite Steueralgorithmus eine verminderte Leistungsfähigkeit des Motors bewirkt kann durch den Übergangsalgorithmus somit ein stetiges Abbauen der Leistungsfähigkeit des Motors vorgenommen werden, die im besten Fall vom Fahrer überhaupt nicht bemerkt wird. So kann beispielsweise vorgesehen sein, dass die Korrelation zwischen Gaspedal und Drehmoment stetig, d.h. insbesondere stufenlos oder mit kleinen Stufen, angepasst wird zwischen dem Ausgangszustand, nämlich dem ersten Steueralgorithmus, und dem Endzustand, nämlich dem zweiten Steueralgorithmus. Ein späteres Wechseln vom zweiten in den ersten Steueralgorithmus kann auch abrupt sein, d.h. ohne einen Übergangsalgorithmus durchgeführt werden.

Die aktuellen Positionsdaten werden dabei vorzugsweise auch mittels eines Satelliten-Positionserkennungssystems erzeugt. Prognostizierte Positionsdaten können insbesondere mit Hilfe auch eines Navigationssystems ermittelt werden. Hier können Teile einer vorausliegenden Fahrtroute oder das Fahrtziel prognostizierte Positionsdaten darstellen.

Steueralgorithmen werden vorzugsweise in Abhängigkeit von Ortsvorgaben erzeugt oder angepasst. Die Ortsvorgaben können insbesondere Informationen umfassen, die für die Erzeugung oder Anpassung der Steueralgorithmen und die damit erreichbaren Leistungswerte oder Emissionswerte erforderlich sind. So kann beispielsweise vorgesehen sein, dass die Ortsvorgaben Emissionsgrenzwerte für Fahrzeuge umfassen, die sich jedoch nur auf einen bestimmten Verkehrsraum beziehen, nämlich insbesondere einen definierten Innenstadtbereich oder einen definierten ländlichen Bereich oder einen definierten Straßenabschnitt. So können im Innenstadtbereich strengere Grenzwerte vorgesehen sein, als im ländlichen Bereich. Die Ortsvorgaben können dabei aber auch dynamisch sein; so kann vorzugsweise vorgesehen sein, dass Ortsvorgaben zeitlich veränderbar sind. Die Ortsvorgaben können dann zum Beispiel jahreszeitliche Informationen umfassen, wobei z.B. dem Umstand Rechnung getragen werden kann, dass in den Sommermonaten häufiger eine stärkere Ozonbelastung auftritt als in Wintermonaten. Ferner können die Ortsvorgaben auch an andere insbesondere temporäre Ereignisse angepasst sein, wie das Vorhandensein von Baustellen oder ähnlichem. Beim Durchfahren von Baustellen kann dabei die Sportlichkeit eines Fahrzeuges aufgrund geltender Geschwindigkeitsbegrenzung überhaupt keine Rolle spielen. Dann kann das Fahrzeug sehr gut auf ein möglichst sparsames Fahrverhalten eingestellt werden.

Ortsvorgaben und/oder Motorsteuerdaten können dabei in einer Speichereinrichtung, die fest mit dem Fahrzeug verbunden ist, gespeichert sein. Ortsvorgaben können aber auch dynamisch an das Fahrzeug übertragen werden. Insbesondere können Ortsvorgaben und/oder Motorsteuerdaten über eine Datenfernverbindung von einem Rechenzentrum auf ein Fahrzeug übertragen werden und damit in einem Speicher des Fahrzeugs abgelegt werden. Eine Datenfernverbindung kann beispielsweise eine Internetleitung oder auch eine Mobilfunkverbindung sein. Ortsvorgaben können Bestandteil von elektronischen Straßenkarten sein. Insbesondere durch das Übermitteln von Motorsteuerdaten auf das Fahrzeug über die Datenfernverbindung kann die Motorsteuerung schnell angepasst werden. Gesetzliche Vorgaben können zügig umgesetzt werden. Unter Motorsteuerdaten können Steueralgorithmen, Übergangsalgorithmen und/oder Steuerparameter verstanden werden. Steuerparameter können dabei Informationen zur Anpassung von vorhandenen Steueralgorithmen und/oder Übergangsalgorithmen umfassen.

Die Datenfernverbindung kann insbesondere auch zur bidirektionalen Kommunikation mit einer entfernten Wartungseinrichtung mit dem Kraftfahrzeug genutzt werden, so insbesondere zum Zwecke der Kontrolle von Änderungen der Motoreinstellungen und/oder der Emissionsdaten. Hierzu können vorzugsweise Motorsteuerdaten über die Datenfernverbindung an eine entfernte Wartungseinrichtung übertragen werden.

Es kann vorgesehen sein, dass eine erste Gruppe von Ortsvorgaben durch einen Benutzer nicht manipulierbar sind. Dies betrifft insbesondere solche Ortsvorgaben, durch die gesetzliche Regelungen umgesetzt werden, wie beispielsweise Emissionsgrenzwerte oder Geschwindigkeitsbegrenzungen in bestimmten Verkehrsräumen. Da die gesetzlichen Vorgaben zwingend ausgeführt werden müssen, ist eine Manipulation durch den Benutzer damit unerwünscht, insbesondere unerlaubt.

Alternativ oder in Kombination kann vorgesehen sein, dass eine zweite Gruppe von Ortsvorgaben durch einen Benutzer manipulierbar sind. Dies betrifft insbesondere Ortsvorgaben, die mehr oder weniger eine Empfehlung an den Benutzer darstellen können. So können Ortsvorgaben zu einem Steueralgorithmus führen, der eine gewisse Höchstgeschwindigkeit als Richtgeschwindigkeit vorgibt. Durch entsprechende Gaspedalbetätigung, beispielsweise durch einen Kick-Down, könnte eine solche Richtgeschwindigkeit dennoch übersteuert werden, insbesondere für Gefahrensituationen, bei der eine Flucht nach vorne angebracht ist.

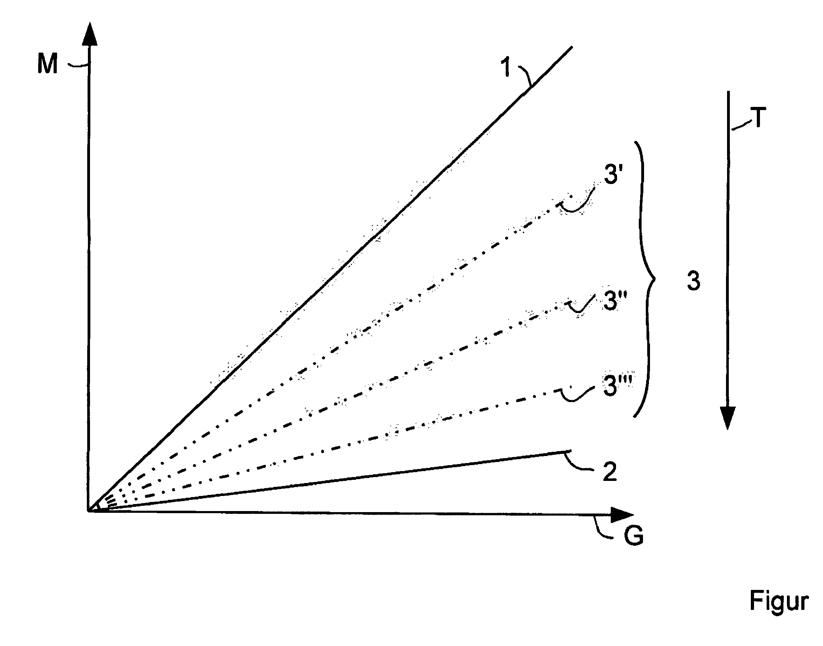

Die Erfindung betrifft ferner ein Kraftfahrzeug, welches eine Steuereinrichtung umfasst, auf der ein Verfahren nach einem der vorherigen Ansprüche betrieben wird. In der Figur ist die Veränderung von Steueralgorithmen über die Zeit T schematisch anhand einer vereinfachten Korrelation des Motormoments M zur Gaspedalstellung G aufgezeigt. Die Kurven 1 bis 3 stehen dabei stellvertretend für unterschiedliche Steueralgorithmen oder für unterschiedliche Zustände eines anpassbaren Steueralgorithmus zum Steuern eines Verbrennungsmotors eines Automobils dar.

Ein erster Steueralgorithmus 1 sieht vor, dass bei einer starken Auslenkung des Gaspedals ein hohes Motordrehmoment erzeugt werden kann. Dies führt zu sportlichen Fahrleistungen, die aber auch mit hohen Schadstoffemissionen einhergehen können. Der erste Steueralgorithmus 1 ist insbesondere für Autobahnund Überlandfahrten geeignet.

Ein zweiter Steueralgorithmus 2 ist gegenüber dem ersten Steueralgorithmus 1 abgeregelt. Die maximale Motorleistung ist dabei nicht mehr abrufbar. Bei einer bestimmten Gaspedalstellung ist ein gegenüber dem ersten Steueralgorithmus geringeres Motordrehmoment erzeugbar. Ein Fahrzeug ist bei Betrieb des zweiten Steueralgorithmus daher deutlich umweltschonender. Der zweite Steueralgorithmus ist insbesondere für den innerstädtischen Betrieb vorgesehen.

Damit der Fahrer den Übergang zwischen erstem und zweiten Steueralgorithmus nicht negativ empfindet ist ein Übergangsalgorithmus 3 vorgesehen, der mehrere Unteralgorithmen 3', 3", 3''' umfasst. Bei einem ersten Unteralgorithmus 3' ist der Grad der Abregelung noch relativ gering, während bei den zeitlich nachfolgenden Unteralgorithmen 3", 3''' der Grad der Abregelung weiter zunimmt. Der Grad der Abregelung kann stufenlos aber auch mit kleinen Stufen erfolgen. Unter einem stetigen Übergang wird daher auch ein Übergang vom ersten auf den zweiten Steueralgorithmus verstanden, der diskrete Einzelschritte 3', 3", 3''' umfasst. Das Wechseln vom ersten Steueralgorithmus auf den Übergangsalgorithmus erfolgt bereits bevor das Fahrzeug den Verkehrsraum mit erhöhten Schadstoffgrenzwerten erreicht hat. Der zeitliche Ablauf des Übergangs wird mit Hilfe eines Navigationssystems ermittelt. Das endgültige Wechseln in den zweiten Steueralgorithmus 2 erfolgt dann mit Eintreten in den Verkehrsraum mit erhöhten Schadstoffgrenzwerten.

Entsprechend Analoges gilt natürlich auch für den umgekehrten Fall, bei dem vom abgeregelten Zustand in den sportlichen Zustand gewechselt werden soll. Hier kann auch ein stetiger Übergang vorgesehen sein. Jedoch kann gerade beim Wechsel vom abgeregelten Zustand in den sportlichen Zustand ein abruptes Umschalten die Sportlichkeit des Fahrzeugs betonen und daher auch bevorzugt sein.

### Bezugszeichenliste

- 1: erster Steueralgorithmus
- 2: zweiter Steueralgorithmus
- 3: Übergangsalgorithmus

- G: Gaspedalstellung
- M: Motormoment
- T: Zeit

## Patentansprüche

1. Verfahren zum Steuern einer Verbrennungskraftmaschine eines Kraftfahrzeugs, umfassend die folgenden Verfahrensschritte:
Ermitteln von Positionsdaten, welche zumindest die aktuelle Position des Kraftfahrzeugs umfassen,
Auswerten der Positionsdaten,
Auswählen oder Anpassen eines Steueralgorithmus (1, 2) zur aktuellen Steuerung der Verbrennungskraftmaschine in Abhängigkeit der ausgewerteten Positionsdaten.

2. Verfahren nach dem vorherigen Anspruch, **dadurch gekennzeichnet, dass** die ermittelten Positionsdaten ferner prognostizierte Positionsdaten einer zukünftigen Position des Kraftfahrzeugs umfassen.

3. Verfahren nach dem vorherigen Anspruch, **dadurch gekennzeichnet, dass** ein erster Steueralgorithmus (1) anhand von aktuellen oder zurückliegenden Positionsdaten ausgewählt oder angepasst wird und dass ein zweiter Steueralgorithmus (2) anhand der prognostizierten Positionsdaten ausgewählt oder angepasst wird, wobei ein Übergangsalgorithmus (3) zur aktuellen Steuerung erzeugt oder ausgewählt wird, der einen stetigen Übergang vom ersten Steueralgorithmus (1) zum zweiten Steueralgorithmus (3) darstellt.

4. Verfahren nach einem der vorherigen Ansprüche, **dadurch gekennzeichnet, dass** aktuelle Positionsdaten mit einem sattelitengestützten Positionserkennungssystem erzeugt werden.

5. Verfahren nach einem der vorherigen Ansprüche, **dadurch gekennzeichnet, dass** einer der Steueralgorithmen in Abhängigkeit von Ortsvorgaben erzeugt oder angepasst wird.

6. Verfahren nach dem vorherigen Anspruch, **dadurch gekennzeichnet, dass** die Ortsvorgaben zeitlich veränderbar sind.

7. Verfahren nach einem der Ansprüche 5 oder 6, **dadurch gekennzeichnet, dass** die Ortsvorgaben und/oder Motorsteuerdaten über eine Datenfernverbindung auf ein Fahrzeug übertragen werden können.

8. Verfahren nach einem der vorherigen Ansprüche, **dadurch gekennzeichnet, dass** über eine Datenverbindung Motorsteuerdaten an eine entfernte Wartungseinrichtung übertragen werden.

9. Verfahren nach einem der vorherigen Ansprüche, **dadurch gekennzeichnet, dass** Ortsvorgaben durch einen Benutzer nicht manipulierbar sind.

10. Verfahren nach einem der vorherigen Ansprüche, **dadurch gekennzeichnet, dass** Ortsvorgaben durch einen Benutzer manipulierbar sind.

11. Kraftfahrzeug, umfassend eine Steuereinrichtung, auf der ein Verfahren nach einem der vorherigen Ansprüche betrieben wird.
